# NEUE EUROPÄISCHE PATENTSCHRIFT

(11) **EP 1 878 917 B2**
(45) Veröffentlichungstag und Bekanntmachung des Hinweises auf die Entscheidung über den Einspruch: **26.10.2016**
(45) Hinweis auf die Patenterteilung: 20.02.2013
(21) Anmeldenummer: 07013057.0
(22) Anmeldetag: 04.07.2007
(51) Int. Cl.: F16H 1/48, F03D 80/00, F03D 15/00

(54) **Windenergieanlage**
Wind turbine
Eolienne

(30) Priorität: 12.07.2006 DE 102006032525
(43) Veröffentlichungstag der Anmeldung: 16.01.2008
(73) Patentinhaber: Senvion GmbH, 22297 Hamburg (DE)
(72) Erfinder: Quell, Peter, 24783 Osterrönfeld (DE); Trede, Alf, 25885 Immenstedt (DE)
(74) Vertreter: Glawe, Delfs, Moll

(56) Entgegenhaltungen:
- EP-A1- 1 677 032
- EP-A2- 1 243 791
- DE-C- 837 230
- GB-A- 2 074 661
- GB-A- 2 074 661
- E. HAU: 'Windkraftanlagen', Bd. 3, 2003, SPRINGER, BERLIN HEIDELBERG - NEW YORK Seiten 250 - 258-259; 278-279; 280-281; 294-295; 296-297
- Bywaters, G., et al.: Northern Power Systems WindPACT Drive Train Alternative Design Study Report; Period of Performance: April 12, 2001 to January 31, 2005, NREL/SR-500-35524, 01 October 2004.DOI: 10.2172/15007774.
- U. GIGER ET AL.: 'Leistungsverzweigte Planetengetriebe in Windenergieanlagen mit flexibler Planetenlagerung', 2003, WISSENSCHAFTSVERLAG, MAINZ IN AACHEN

## Beschreibung

Die vorliegende Erfindung betrifft eine Windenergieanlage mit einem Triebstrang, der über ein vorderes und ein hinteres Wälzlager gelagert ist, und einen Rotor, eine Rotorwelle sowie ein Getriebe aufweist, das in seinem vorderen Bereich über eine Drehmomentenstütze mit dem Maschinenträger der Windenergieanlage gekoppelt ist.

Eine bekannte Windenergieanlage weist eine Rotorwelle auf, die mittels zweier Wälzlager in einem Lagerbock gelagert ist. An ihrem einen Ende ist die Rotorwelle mit dem Rotor und an ihrem anderen Ende mit dem Getriebe gekoppelt. Ein Beispiel einer solchen Windenergieanlage ist dem Dokument GB 2074661 A zu entnehmen.

Eine weitere bekannte Windenergieanlage weist einen sich nicht drehenden Träger-Hohlzapfen auf, an dem der Rotor mittels zweier Wälzlager drehbar gelagert ist. Das Antriebsdrehmoment wird mittels einer in dem Hohlzapfen koaxial gelagerten Welle auf das Getriebe übertragen.

Die beiden oben beschriebenen bekannten Windenergieanlagen weisen den Nachteil auf, dass die Rotorwelle inklusive deren Lagerung und Lagerbock bzw. der Träger-Hohlwelle sehr schwer und zudem sehr teuer sind. Des weiteren kann es bei diesem beiden bekannten Windenergieanlagen zu Verspannungen des Triebstranges durch Fertigungstoleranzen und unter Last zu Verformungen der Anschlußkonstruktionen kommen.

Eine weitere Windenergieanlage ist z. B. aus der WO 96/11338 A1 bekannt. Diese bekannte Windenergieanlage weist ein Planetengetriebe auf, mit einem in einem Getriebegehäuse gelagerten Planetenträger, der mit einer Antriebswelle verbunden ist, wobei die Antriebswelle über den Planetenträger im Getriebegehäuse gelagert ist.

Der Nachteil dieser bekannten Windenergieanlage ist zum einen, dass die gesamte Biegebelastung aus dem Rotor in der Planetenstufe aufgenommen wird. Dies wirkt sich nachteilig auf die Lebensdauer des Getriebes aus. Weiterhin ist bei dieser bekannten Windenergieanlage von Nachteil, dass im Falle eines Schadens im Triebstrang, z. B. das Getriebe oder ein Lager, die Demontage der entsprechenden Komponente sehr kostenintensiv und zeitaufwendig ist.

Bei einer weiteren bekannten Windenergieanlage ist der Triebstrang über eine 3-Punkt-Lagerung im Bereich des Kopfflansches des Turmes gelagert. Der Nachteil dieser bekannten Windenergieanlage ist zum einen, dass der Rotor bei hohem Windaufkommen in Richtung Getriebe geschoben wird, was zur Folge hat, dass es zu Verschiebungen in der Verzahnung des Getriebes kommt, die sich nachteilig auf die Lebensdauer des Getriebes auswirken. Weiterhin weist diese Form der Rotorlagerung den Nachteil auf, dass eine Demontage des Getriebes ohne Demontage des Rotors nicht oder nur sehr aufwendig möglich ist. Zudem werden bei dieser Lagerungsart die Biegemomente des Rotors durch die Rotorwelle und den fest verbundenen Planeten- oder Hohlradträger in das Getriebe geleitet. Zudem wird auch das Getriebe-Gewichtsmoment über den Planetenträger abgestützt, wodurch sich zusätzliche Nachteile hinsichtlich der Lebensdauer des Getriebes ergeben.

Aufgabe der vorliegenden Erfindung ist daher die Schaffung einer Windenergieanlage, bei der zum einen die negativen Wirkungen der äußeren Rotorbelastungen auf die Lager- und Getriebekomponenten minimiert werden, um auf die Weise die Lebensdauer zu verbessern. Zum anderen soll die Windenergieanlage so ausgebildet sein, dass im Falle eines Schadens im Triebstrang eine Demontage der jeweiligen Komponente einfach und schnell möglich ist, um auf diese Weise dabei anfallende Reparaturkosten zu senken.

Gelöst wird die Aufgabe mit einer Windenergieanlage, welche die kennzeichnenden Merkmale des Anspruchs 1 aufweist.

Die erfindungsgemäße Windenergieanlage weist einen Triebstang auf, der über ein vorderes und ein hinteres Wälzlager gelagert ist. Der Triebstrang weist einen Rotor, eine Rotorwelle sowie ein Getriebe auf, welches in seinem vorderen Bereich über eine Drehmomentenstütze mit dem Maschinenträger der Windenergieanlage gekoppelt ist.

Erfindungsgemäß ist das hintere Wälzlager im Bereich der Drehmomentenstütze angeordnet ist.

Die vorliegende Erfindung bietet durch die Anordnung des hinteren Wälzlagers im Bereich der Drehmomentenstütze den Vorteil, dass eine Demontage des Getriebes in einfacher Weise möglich ist, da es bei der vorliegenden Erfindung z. B. nicht notwendig ist zunächst den Rotor zu demontieren.

Des weiteren muss gemäss der vorliegenden Erfindung z. B. kein zweites Lagergehäuse vorgesehen werden, da das hintere Lagergehäuse in der Drehmomentenstütze integriert ist. Dies bietet den Vorteil, dass die Rotorlagerung gegenüber dem Stand der Technik leichter und auch billiger wird.

Erfindungsgemäß ist das Getriebe als ein- oder mehrstufiges Planetengetriebe ausgebildet, wobei eine Planetenstufe ein Hohlrad, einen Planetensatz und eine Sonne aufweist. Das Getriebe kann so ausgebildet sein, dass bei einer Demontage des Getriebes Hohlrad und Planetensatz als Einheit von der Drehmomentenstütze abkoppelbar sind. Unter einem Planentensatz wird ein Planeten- oder Hohlradträger zusammen mit den Planeten und den Komponenten zur Lagerung der Planeten in dem Planetenträger verstanden. Denkbar ist auch gemäß einer weiteren vorteilhaften Ausgestaltung der Erfindung, dass eine Planetenstufe als Einheit von der Drehmomentenstützte abkoppelbar ist.

Diese Ausgestaltungen bieten den Vorteil, dass auch hierdurch die Demontage des Getriebes im Schadensfall einfacher, schneller und damit kostengünstiger ausgeführt werden kann. Außerdem kann die komplette Demontage der Lagerung des Planetensatzes im Hohlrad oder sogar der gesamten Planetenstufe vorteilhaft in einer Werkstatt erfolgen.

Erfindungsgemäß ist vorgesehen, dass das Hohlrad fest mit der Drehmomentenstütze gekoppelt ist. Diese Ausgestaltung bietet den Vorteil, dass die Gewichtskräfte über das Hohlrad aufgenommen werden und nicht über den Planeten- oder Hohlradträger, so dass auf diese Weise wiederum die Verzahnungen des Getriebes entlastet werden.

Erfindungsgemäß erfolgt die Lagerung des Triebstrangs im Bereich der Drehmomentenstütze über ein Momentenlager.

Ein Momentenlager bietet den Vorteil, das es die Übertragung von axialen und radialen Kräften ermöglicht sowie von Biegemomenten aus dem Getriebegewicht. Zudem werden durch die Lagerung des Triebstrangs über ein Momentenlager keine Rotorbiegemomente auf den Planeten- oder Hohlradträger übertragen, sondern nur Drehmomente. Dies bietet ebenfalls den Vorteil der Entlastung der Verzahnungen in dem Getriebe, wodurch wiederum die Langlebigkeit des Getriebes verbessert wird.

Das Momentenlager kann durch den Ölkreislauf des Getriebes geschmiert werden. Gemäß einer weiteren vorteilhaften Ausgestaltung der Erfindung kann aber auch eine Fettschmierung vorgesehen werden. Diese Ausgestaltung bietet den Vorteil, dass die Windenergieanlage auch bei demontierten Getriebe trudeln kann.

Gemäß weiterer vorteilhafter Ausgestaltungen der Erfindung ist der Triebstrang im Bereich der vorderen Rotorwelle über ein Festlager gelagert, wobei das Festlager winkelbeweglich ausgebildet sein kann. Die Drehmomentenstütze kann aus seitlich am Getriebe angeordneten Stützarmen bestehen, die mit Lagerböcken gekoppelt sind, welche mit dem Maschinenträger verbunden sind. Die Kopplung der Stützarme mit den Lagerböcken kann über eine elastische Aufhängung erfolgen. Die elastische Aufhängung kann über Querbolzen realisiert werden, die über Elastomerlager, z. B. elastische Buchsen, in den Lagerböcken gelagert sind.

Diese Ausgestaltungen bieten den Vorteil, dass Verspannungen, die sich aus Fertigungstoleranzen und Verformungen der Triebstrangkomponenten und sich anschließender Strukturen der Windenergieanlage unter Last ergeben, auf ein Minimum reduzieren lassen.

Gemäß einer weiteren vorteilhaften Ausgestaltung der Erfindung können die Querbolzen auch winkelbeweglich, z. B. über Gelenklager, in der Drehmomentenstütze gelagert sein.

Die winkelbewegliche Lagerung der Querbolzen in der Drehmomentenstütze bietet den Vorteil, dass die vorgenannten Verspannungen noch zusätzlich reduziert werden. Gleichzeitig wird auf diese Weise noch für eine gleichmäßigere Belastung der Elastomerlager gesorgt. Weiterhin ermöglichen sie den Einsatz von sehr kurzen Rotorwellen und damit verbunden größeren Winkelverlagerungen des Triebstrangs, ohne dass dabei zusätzliche Verspannung zu erzeugt werden.

Entsprechend einer weiteren vorteilhaften Ausgestaltung der vorliegenden Erfindung ist das getriebeseitige Rotorwellenende mit einer Aussenverzahnung versehen, die in Eingriff mit der Verzahnung des Planeten- oder Hohlradträger ist.

Diese Ausgestaltung der Erfindung ermöglicht, dass Drehmomente der Rotorwelle auf den Planeten- oder Hohlradträger mittels einer leicht lösbaren Verbindung übertragen werden. Vorteilhaft wird durch diese Ausgestaltung der Planeten- oder Hohlradträger gleichzeitig gelagert, wodurch sonst notwendige zusätzliche Stützlager wegfallen können.

Wie bereits bei der Diskussion des Standes der Technik erwähnt, kann es insbesondere bei hohem Windaufkommen dazukommen, dass die Rotorwelle durch den Rotor in Richtung Getriebe geschoben wird, wodurch es zu nachteiligen Verschiebungen in der Verzahnung des Getriebes kommt. Bei der vorliegende Erfindung ist die Lagerung des Triebstrangs so ausgebildet, dass bei einem Schub des Rotors das ganze Getriebe geschoben wird. Dies bietet den Vorteil, das Verspannungen insbesondere im Bereich der Verzahnungen im Getriebe erheblich reduziert sowie Axialbewegungen durch das Festlager im Getriebe vermieden werden können, wodurch die Lebensdauer des Getriebes deutlich erhöht und zudem auch evtl. anfallenden Reparaturarbeiten deutlich verringert werden können.

Eine weitere vorteilhafte Ausgestaltung der vorliegenden Erfindung sieht vor, dass die Rotowelle von der 1. Getriebestufe über mindestens eine an dem getriebeseitigen Rotorwellenende angeordnete Scheibe entkoppelbar ist. Diese Ausgestaltung ermöglicht ebenfalls vorteilhaft eine einfache Demontage des Getriebes, wodurch die Demontagearbeiten noch einfacher und entsprechend kostengünstiger ausgeführt werden können.

Gemäß weiterer vorteilhafter Ausgestaltungen der Erfindung ist die Scheibe mit ihrer einen Seite mit dem getriebeseitigen Rotorwellenende verbunden und mit ihrer anderen Seite mit dem Getriebe gekoppelt, wobei die Scheibe vorteilhaft zum Ausgleich von auftretenden Verspannungen bei der Übertragung der Drehmomente von der Rotorwelle auf das Getriebe mindestens einen elastisch verformbaren Bereich aufweist. Der elastisch verformbare Bereich kann z. B. durch eine in der Scheibe vorgesehene Aussparung begrenzt sein.

Entsprechend einer weiteren Ausgestaltung der Erfindung entspricht die Anzahl der elastisch verformbaren Bereiche der Scheibe der Anzahl der Planeten des Planetensatzes. Die erfindungsgemäße Ausgestaltung bietet den Vorteil, dass auf diese Weise die auftretenden Verspannungen bei der Übertragung des Drehmomentes symmetrisch auf den Planetenträger übertragen werden kann.

Vorzugsweise ist der elastisch verformbare Bereich gemäß einer weiteren vorteilhaften erfindungsgemäßen Ausgestaltung durch einen Schlitz begrenzt, der sich spiralförmig um die Rotationsachse der Scheibe erstreckt. Diese Ausgestaltung bietet den Vorteil, dass in radialer Richtung auftretende Verspannungen aufgenommen werden können. Aufgrund dessen ist es weiterhin vorteilhaft, dass die Scheibe aus Federstahl hergestellt wird, da dieses Material für die erfindungsgemäße Verformung der Scheibe sehr gut geeignet ist.

Weiterhin ist es vorteilhaft, die Schlitze mittels des Wasserstrahlschneidverfahrens in die Scheibe einzubringen. Dieses Verfahren bietet z. B. gegenüber dem Laserschneidvefahren den Vorteil, dass sich das Material während des Schneidvorganges nicht erwärmt und dabei seine hochfesten und elastischen Eigenschaften verliert.

Vorzugsweise ist nur eine Scheibe zur Entkopplung vorgesehen. Es ist aber auch denkbar, z. B. wenn die Dicke der Scheibe aufgrund z. B. des Materials limitiert ist, mehrere parallel geschaltete Scheiben vorzusehen, wobei es vorteilhaft sein kann, zwischen den einzelnen Scheiben elastisch ausgebildete Trennplatten anzuordnen.

Im folgenden soll die vorliegende Erfindung anhand zweier Figuren näher erläutert werden. Es zeigen:

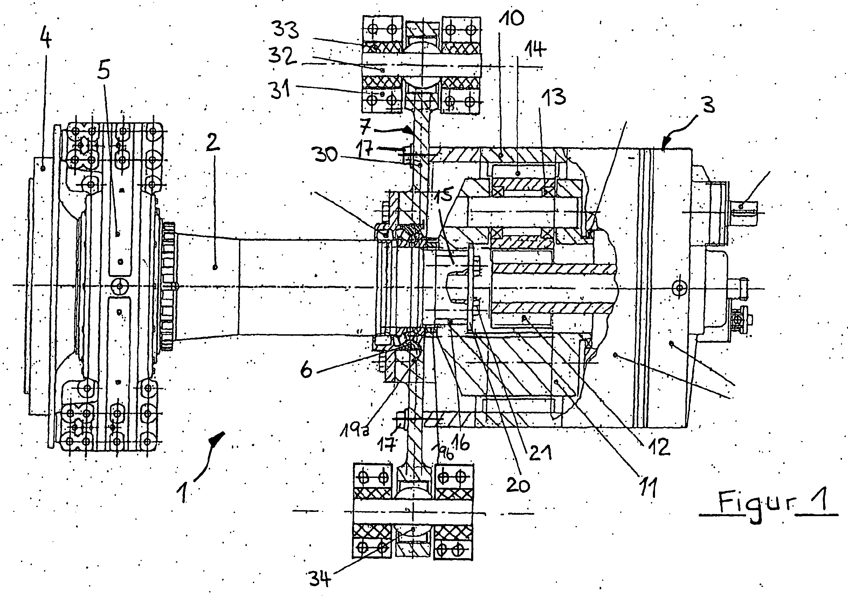

- Figur 1: eine Draufsicht auf den Triebstrang 1 einer erfindungsgemäßen Windenergieanlage in Schnittdarstellung.
- Figur 2: eine Ansicht auf eine Scheibe zur Entkopplung der Rotorwelle von dem Getriebe.

Der Triebstrang 1 besteht aus einem nicht dargestellten Rotor, einer Rotorwelle 2 und einem Planetengetriebe 3, wobei die Rotorwelle 2 über einen Rotorwellenflansch 4 mit dem Rotor verbunden ist.

Der Triebstrang 1 ist über ein vorderes Wälzlager 5 und ein hinteres Wälzlager 6 gelagert. Das vordere Wälzlager 5 ist als winkelbewegliches Festlager im Bereich der vorderen Rotorwelle 2 angeordnet. Das hintere Wälzlager 6 ist als Momentenlager ausgebildet und im Bereich der Drehmomentenstütze 7 angeordnet, die das Planetengetriebe 3 mit dem nicht dargestellten Maschinenträger der Windenergieanlage koppelt. Das Momentenlager 6 wird über einen Sicherungsring 19a und eine Wellenmutter 19b gegen axiales Verschieben gesichert.

Das Planetengetriebe 3 besteht aus einem Hohlrad 10, einem Planetenträger 11 und einer Sonne 12. In dem Planetenträger 11 sind über Planentenlager 13 gelagerte Planeten 14 angeordnet, die eine Außenverzahnung aufweisen, die mit einer im Hohlrad 10 vorgesehenen Innenverzahnung und einer an der Sonne 12 vorgesehenen Außenverzahnung in Eingriff sind. Weiterhin ist das Hohlrad 10 über Verschraubungen 17 fest mit der Drehmomentenstütze 7 gekoppelt.

Die Übertragung der Drehmomente des Rotors erfolgt von der Rotorwelle 2 auf den Planetenträger 11. Hierzu weist das getriebeseitige Rotorwellenende 15 eine Außenverzahnung 16 auf, die in Eingriff mit einer im Planetenträger 11 vorgesehenen Innenverzahnung ist.

Diese Anordnung ermöglicht gleichzeitig eine Lagerung des Planententrägers. Zusätzlich wird das Planetengetriebe über ein Stützlager 18 gestützt. Das Stützlager kann durch ein elastisches Element, z. B. O-ring eine Nachgiebigkeit erhalten.

Am getriebeseitigen Rotorwellenende 15 ist weiterhin eine Fixierungsscheibe 20 angeordnet, die über Schrauben 21 an dem Rotorwellenende 15 befestigt ist. Die Fixierungsscheibe ist so ausgebildet und angeordnet, dass sie den Planetenträger axial fixiert, so dass ein Verschieben des Planetenträgers in axialer Richtung verhindert wird.

Zum anderen ermöglicht die Scheibe ein einfaches Lösen der Rotorwelle 2 von dem Getriebe 3. Zu diesem Zweck wird die Sonne 12 aus dem Getriebe 3 herausgezogen. Anschließend werden die Schrauben 21 gelöst und die Scheibe entfernt. Nachfolgend können das Hohlrad 10 und der Planetenträger zusammen mit den Planeten (Planetensatz) als Einheit von der Drehmomentenstütze 7 abgekoppelt werden.

Alternativ kann die Fixierung des Planetenträgers auch über ein in der Rotorwelle angeordnetes Rohr erfolgen. Die Scheibe weist eine Öffnung mit einem Innengewinde auf und wird auf das Rohr, das zu diesem Zweck an seinen getriebeseitigen Ende ein Aussengewinde aufweist, aufgeschraubt. An seinem rotorseitigen Ende wird das Rohr anschließend über Schrauben verspannt. Zur Demontage wird als erstes die das Rohr verspannenden Schrauben und danach das Rohr gelöst, so dass der Planetenträger axial nicht mehr durch die Welle fixiert ist. Nachfolgend können die Sonne 12, das Hohlrad 10 und Planetenträger zusammen mit den Planeten als Einheit von der Drehmomentenstütze 7 abgekoppelt werden. Bei diesem Verfahren müssen somit die empfindlichen Verzahnungen des Getriebes (z. B. des Planetensatzes) nicht auf der Anlage demontiert werden.

Die Drehmomentenstütze 7 weist seitlich am Getriebe angeordnete Stützarme 30 auf, die mit Lagerböcken 31 gekoppelt sind, welche mit dem nicht dargestellten Maschinenträger verbunden sind, wobei die Kopplung der Stützarme 30 mit den Lagerböcken 31 über eine elastische Aufhängung erfolgt.

Zum Zwecke der elastischen Aufhängung sind Querbolzen 32 vorgesehen, die über elastische Buchsen 33 in den Lagerböcken gelagert sind. Zusätzlich sind die Querbolzen mittels Gelenklagern 34 winkelbeweglich in der Drehmomentenstütze 7 gelagert.

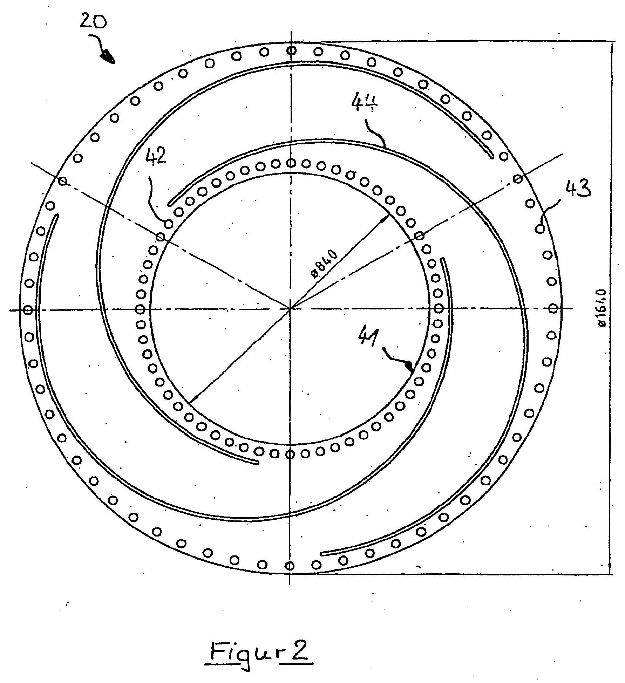

Die Übertragung des Drehmomentes von der Rotorwelle kann statt der am getriebeseitigen Rotorwellenende 15 vorgesehenen Außenverzahnung 16, die in Eingriff mit einer im Planetenträger 11 vorgesehenen Innenverzahnung ist, über eine, wie in Figur 2, dargestellten Scheibe 40 erfolgen. Das Anordnen der Scheibe 40 ermöglicht, wie die Verzahnung zwischen Rotorwellenende 15 und Planetenträger 11 eine leichtes Lösen der Rotorwelle von der 1. Getriebestufe des Getriebes.

Die Scheibe 40 wird mit dem getriebeseitigen Rotorwellenende 15 über die Bohrungen 42 und nicht dargestellte Schraubverbindungen verbunden. Die Scheibe 40 wird weiterhin mit dem Planetenträger über die Bohrungen 43 und nicht dargestellte Schraubverbindungen verbunden.

Die Scheibe 40 weist elastische verformbare Bereiche auf, die als Schlitze 44 ausgebildet sind, die sich spiralförmig um die Rotationsachse der Scheibe 40 erstrecken. Somit werden Rotorwelle und Getriebe mechanisch entkoppelt.

Wie oben bereits erläutert, kann die Scheibe aus Federstahl hergestellt werden. Der Durchmesser der Scheibe kann, wie auf der Figur 2 angegeben, 1640 mm betragen. Maximal sollte die Scheibe nur eine Dicke von 150 mm aufweisen. Für den Fall, dass eine solche Scheibendicke nicht ausreicht, können mehrere Scheiben parallel hintereinander geschaltet werden.

## Patentansprüche

1. Windenergieanlage mit einem Triebstrang (1), der über ein vorderes und ein hinteres Wälzlager (5, 6) gelagert ist, und einen Rotor, eine Rotorwelle (2) sowie ein Getriebe (3) aufweist, das in seinem vorderen Bereich über eine Drehmomentenstütze (7) mit dem Maschinenträger der Windenergieanlage gekoppelt ist, wobei das hintere Wälzlager (6) im Bereich der Drehmomentenstütze (7) angeordnet ist, wobei das Getriebe (3) als ein- oder mehrstufiges Planetengetriebe ausgebildet ist, wobei eine Planetenstufe mindestens ein Hohlrad (10), einen Planetensatz (11, 13, 14) sowie eine Sonne aufweist, **dadurch gekennzeichnet, dass**
das Hohlrad (10) mit der Drehmomentenstütze (7) gekoppelt ist, wobei die Lagerung des Triebstrangs (1) im Bereich der Drehmomentenstütze (7) über ein Momentenlager (6) erfolgt und wobei das hintere Lagergehäuse (6) in-der Drehmomentenstütze (7) integriert ist.

2. Windenergieanlage nach Anspruch 1,
**dadurch gekennzeichnet, dass**
das Getriebe (3) so ausgebildet ist, dass bei einer Demontage des Getriebes (3) das Hohlrad (10) und der Planetensatz (11, 13, 14) als Einheit von der Drehmomentenstütze (7) abkoppelbar sind.

3. Windenergieanlage nach Anspruch 1,
**dadurch gekennzeichnet, dass**
das Getriebe (3) so ausgebildet ist, dass bei einer Demontage des Getriebes (3) eine Planetenstufe als Einheit von der Drehmomentenstütze (7) abkoppelbar ist.

4. Windenergieanlage nach dem vorstehenden Anspruch,
**dadurch gekennzeichnet, dass**
die Schmierung des Momentenlagers (6) durch den Ölkreislauf des Getriebes (3) erfolgt.

5. Windenergieanlage nach Anspruch 1,
**dadurch gekennzeichnet, dass**
die Schmierung des Momentenlagers (6) mittels Fettschmierung erfolgt.

6. Windenergieanlage nach einem der vorstehenden Ansprüche,
**dadurch gekennzeichnet, dass**
der Triebstrang (1) im Bereich der vorderen Rotorwelle über ein Festlager (5) gelagert ist.

7. Windenergieanlage nach dem vorstehenden Anspruch,
**dadurch gekennzeichnet, dass**
das Festlager (5) winkelbeweglich ausgebildet ist.

8. Windenergieanlage nach vorstehendem Anspruch,
**dadurch gekennzeichnet, dass**
die Drehmomentenstütze (7) aus seitlich am Getriebe (3) angeordneten Stützarmen (30) besteht, die mit Lagerböcken (31) gekoppelt sind, welche mit dem Maschinenträger verbunden sind.

9. Windenergieanlage nach vorstehendem Anspruch,
**dadurch gekennzeichnet, dass**
die Kopplung der Stützarme (30) mit den Lagerböcken (31) über eine elastische Aufhängung erfolgt.

10. Windenergieanlage nach vorstehendem Anspruch,
**dadurch gekennzeichnet, dass**
die elastische Aufhängung über Querbolzen (32) erfolgt.

11. Windenergieanlage nach vorstehendem Anspruch,
**dadurch gekennzeichnet, dass**
die Querbolzen (32) über Elastomerlager (33) in den Lagerböcken (31) gelagert sind.

12. Windenergieanlage nach einem der beiden vorstehenden Ansprüche,
**dadurch gekennzeichnet, dass**
die Querbolzen (32) winkelbeweglich in der Drehmomentenstütze gelagert sind.

13. Windenergieanlage nach einem der vorstehenden Ansprüche,
**dadurch gekennzeichnet, dass**
das getriebeseitige Rotorwellenende (15) mit einer Aussenverzahnung (16) versehen ist, die in Eingriff mit der Verzahnung des Planeten- oder Hohlradträger (11) ist.

14. Windenergieanlage nach einem der vorstehenden Ansprüche,
**dadurch gekennzeichnet, dass**
die Rotorwelle (2) von dem Getriebe (3) über mindestens eine an dem getriebeseitigen Rotorwellenende (15) angeordnete Scheibe (40) entkoppelbar ist.

15. Windenergieanlage nach dem vorstehenden Anspruch,
**dadurch gekennzeichnet, dass**
die Scheibe (40) auf ihrer einen Seite mit dem getriebeseitigen Rotorwellenende (15) und auf ihrer anderen Seiten mit dem Getriebe (3) gekoppelt ist.

16. Windenergieanlage nach dem vorstehenden Anspruch,
**dadurch gekennzeichnet, dass**
die Scheibe (40) zum Ausgleich von auftretenden Verspannungen bei der Übertragung der Drehmomente von der Rotorwelle (2) auf das Getriebe (3) mindestens einen elastisch verformbaren Bereich aufweist.

17. Windenergieanlage nach dem vorstehenden Anspruch,
**dadurch gekennzeichnet, dass**
der elastisch verformbare Bereich als ein sich spiralförmig um die Rotationsachse der Scheibe (40) erstreckender Schlitz (44) ausgebildet ist.

18. Windenergieanlage nach einem der beiden vorstehenden Ansprüche,
**dadurch gekennzeichnet, dass**
die Anzahl der elastisch verformbaren Bereiche der Scheibe (40) der Anzahl der Planeten des Planetensatzes entspricht.

19. Windenergieanlage nach einem der Ansprüche 14-18,
**dadurch gekennzeichnet, dass**
die Scheibe (40) aus Federstahl hergestellt ist.

20. Windenergieanlage nach einem der Ansprüche 14-19, **dadurch gekennzeichnet, dass** die Schlitze (44) mittels des Wasserstrahlschneidverfahrens in die Scheibe (44) eingebracht sind.

## Claims

1. A wind turbine comprising a drive train (1) that is supported via forward and rearward anti-friction bearings (5, 6) and includes a rotor, a rotor shaft (2) as well as a gear transmission (3) which, in its forward region, is coupled to the bed plate of the wind turbine via a torque reaction bar (7), wherein the rearward anti-friction bearing (6) is arranged within the range of the torque reaction bar (7), wherein the gear transmission (3) is formed as a single- or multiple-stage planetary gear, wherein a planetary stage includes at least one internal ring gear (10), one planetary gear set (11, 13, 14) as well as a sun gear, **characterized in that** the internal ring gear (10) is coupled to the torque reaction bar (7), the drive train (1) being mounted in the range of the torque reaction bar (7) by means of a torque bearing (6), and wherein the rearward bearing housing (6) is integrated in the torque reaction bar (7).

2. The wind turbine according to claim 1, **characterized in that** the gear transmission (3) is formed such that, when the gear transmission (3) is disassembled, the internal ring gear (10) and the planetary gear set (11, 13, 14) can be uncoupled from the torque reaction bar (7) as a unit.

3. The wind turbine according to claim 1, **characterized in that** the gear transmission (3) is formed such that, when the gear transmission (3) is disassembled, a planetary stage can be uncoupled from the torque reaction bar (7) as a unit.

4. The wind turbine according to the preceding claim, **characterized in that** the lubrication of the torque bearing (6) is achieved through the oil circuit of the gear transmission (3).

5. The wind turbine according to claim 1, **characterized in that** the lubrication of the torque bearing (6) is achieved by means of grease lubrication.

6. The wind turbine according to any one of the preceding claims, **characterized in that** the drive train (1) is supported via a fixed bearing (5) within the range of the forward rotor shaft.

7. The wind turbine according to the preceding claim, **characterized in that** the fixed bearing (5) is formed such that it is capable of angular motion.

8. The wind turbine according to the preceding claim, **characterized in that** the torque reaction bar (7) consists of support arms (30) arranged laterally on the gear transmission (3), said support arms (30) being coupled to bearing blocks (31) which are connected to the bed plate.

9. The wind turbine according to the preceding claim, **characterized in that** the coupling of the support arms (30) to the bearing blocks (31) is achieved via an elastic suspension.

10. The wind turbine according to the preceding claim, **characterized in that** the elastic suspension is achieved via transverse bolts (32).

11. The wind turbine according to the preceding claim, **characterized in that** the transverse bolts (32) are supported in the bearing blocks (31) via elastomeric bearings (33).

12. The wind turbine according to any one of the two preceding claims, **characterized in that** the transverse bolts (32) are supported in the torque reaction bar such that they are capable of angular motion.

13. The wind turbine according to any one of the preceding claims, **characterized in that** the rotor shaft end (15) on the gear transmission side is provided with an outer tooth system (16) which engages the teeth of the planetary or internal ring gear carrier (11).

14. The wind turbine according to any one of the preceding claims, **characterized in that** the rotor shaft (2) can be uncoupled from the gear transmission (3) via at least one disk (40) that is arranged on the rotor shaft end (15) on the gear transmission side.

15. The wind turbine according to the preceding claim, **characterized in that**, on one of its sides, the disk (40) is coupled to the rotor shaft end (15) on the gear transmission side and, on its other side, to the gear transmission (3).

16. The wind turbine according to the preceding claim, **characterized in that** the disk (40) includes at least one elastically deformable region for compensating strains occurring during the transmission of the torques from the rotor shaft (2) to the gear transmission (3).

17. The wind turbine according to the preceding claim, **characterized in that** the elastically deformable region is formed as a slot (44) extending around the rotational axis of the disk (40) in a helical manner.

18. The wind turbine according to any one of the two preceding claims, **characterized in that** the number of elastically deformable regions of the disk (40) corresponds to the number of planetary gears of the planetary gear set.

19. The wind turbine according to any one of claims 14 to 18, **characterized in that** the disk (40) is made of spring steel.

20. The wind turbine according to any one of claims 14 to 19, **characterized in that** the slots (44) are made in the disk (44) by means of the water jet cutting method.

## Revendications

1. Éolienne avec un ensemble de transmission (1) logé dans un palier à roulement avant et un palier à roulement arrière (5, 6) et comportant un rotor, un arbre de rotor (2) ainsi qu'un engrenage (3) lequel est, dans sa partie avant, accouplé au support de machine de l'éolienne par l'intermédiaire d'un support dynamométrique (7), le palier à roulement arrière (6) étant disposé dans la zone du support dynamométrique (7), l'engrenage (3) étant réalisé sous forme d'engrenage planétaire à un ou plusieurs étages, un étage planétaire présentant au moins une couronne (10), un jeu de roues planétaires (11, 13, 14) ainsi qu'un soleil, **caractérisée en ce que** la couronne (10) est accouplée au support dynamométrique (7), l'ensemble de transmission (1) étant logé au niveau du support dynamométrique (7) dans un palier à couple (6), et le logement du palier arrière (6) étant intégré au support dynamométrique (7).

2. Éolienne selon la revendication 1, **caractérisée en ce que** l'engrenage (3) est conçu de façon à ce qu'en cas de démontage de l'engrenage (3) la couronne (10) et le jeu de roues planétaires (11, 13, 14) peuvent être désaccouplés du support dynamométrique (7) sous forme d'unité.

3. Éolienne selon la revendication 1, **caractérisée en ce que** l'engrenage (3) est conçu de façon à ce qu'en cas de démontage de l'engrenage (3) un étage planétaire peut être désaccouplé du support dynamométrique (7) sous forme d'unité.

4. Éolienne selon la revendication précédente, **caractérisée en ce que** la lubrification du palier à couple (6) est assurée par le circuit d'huile de l'engrenage (3).

5. Éolienne selon la revendication 1, **caractérisée en ce que** la lubrification du palier à couple (6) est assurée par graissage.

6. Éolienne selon l'une des revendications précédentes, **caractérisée en ce que** l'ensemble de transmission (1) est logé au niveau de l'arbre de rotor avant dans un palier fixe (5).

7. Éolienne selon la revendication précédente, **caractérisée en ce que** le palier fixe (5) est réalisé de façon à avoir un jeu angulaire.

8. Éolienne selon la revendication précédente, **caractérisée en ce que** le support dynamométrique (7) est composé de bras de support (30) agencés latéralement aux côtés de l'engrenage (3) et accouplés à des supports de palier (31) reliés au support de machine.

9. Éolienne selon la revendication précédente, **caractérisée en ce que** les bras de support (30) sont accouplés aux supports de palier (31) au moyen d'une suspension élastique.

10. Éolienne selon la revendication précédente, **caractérisée en ce que** la suspension élastique est assurée au moyen de goujons transversaux (32).

11. Éolienne selon la revendication précédente, **caractérisée en ce que** le logement des goujons transversaux (32) dans les supports de palier (31) est assuré par des paliers élastomères (33).

12. Éolienne selon l'une des deux revendications précédentes, **caractérisée en ce que** les goujons transversaux (32) sont logés dans le support dynamométrique avec un jeu angulaire.

13. Éolienne selon l'une des deux revendications précédentes, **caractérisée en ce que** l'extrémité (15) de l'arbre de rotor côté engrenage est dotée d'une denture extérieure (16) engrenée avec la denture du support de la couronne et des roues planétaires (11).

14. Éolienne selon l'une des deux revendications précédentes, **caractérisée en ce que** l'arbre de rotor (2) peut être désaccouplé de l'engrenage (3) par l'intermédiaire d'au moins un disque (40) situé à l'extrémité (15) de l'arbre de rotor côté engrenage.

15. Éolienne selon la revendication précédente, **caractérisée en ce que** le disque (40) est accouplé d'un côté à l'extrémité (15) de l'arbre de rotor côté engrenage et de l'autre côté à l'engrenage (3).

16. Éolienne selon la revendication précédente, **caractérisée en ce que** le disque (40) présente au moins une zone élastiquement déformable pour compenser des déformations résultant de la transmission des couples de rotation de l'arbre de rotor (2) à l'engrenage (3).

17. Éolienne selon la revendication précédente, **caractérisée en ce que** la zone élastiquement déformable est réalisée sous forme d'entaille (44) s'étendant en spirale autour de l'axe de rotation du disque (40).

18. Éolienne selon l'une des deux revendications précédentes, **caractérisée en ce que** le nombre de zones élastiquement déformables du disque (40) correspond au nombre de roues du jeu de roues planétaires.

19. Éolienne selon l'une des revendications 16 - 20, **caractérisée en ce que** le disque (40) est réalisé en acier à ressorts.

20. Éolienne selon l'une des revendications 16 - 21, **caractérisée en ce que** les entailles (44) sont réalisées dans le disque (44) par découpage au jet d'eau.
